# EUROPEAN PATENT APPLICATION

(11) **EP 0 798 283 A1**
(43) Date of publication of application: **01.10.1997**
(21) Application number: 96104771.9
(22) Date of filing: 26.03.1996
(51) Int. Cl.: C05F 17/00, C05F 9/04

(54) **Composted material and method of manufacture**

(71) Applicant: Rainbow, Arnold, Ipswich, Suffolk IP10 0SW (GB); Wilson, Francis Neil, Ipswich, Suffolk IP4 3AZ (GB)
(72) Inventor: Rainbow, Arnold, Ipswich, Suffolk IP10 0SW (GB); Wilson, Francis Neil, Ipswich, Suffolk IP4 3AZ (GB)
(74) Representative: Gemmell, Peter Alan, Dr.

(57) **Abstract**

A method of manufacturing a modified composted material suitable for use as a plant growth medium or a soil conditioner comprises adding free phosphoric and/or nitric acid to an alkaline composted material in sufficient amount to lower the overall pH of the composted material to a value in the range 4 to 7. The invention also provides a modified composted material obtainable by the method, and a plant growth medium comprising the modified composted material in admixture with a low nutrient bulking agent.

## Description

The present invention relates to a composted material suitable for use as a plant growth medium or a soil conditioner, and to a method of manufacturing such a composted material. The invention notably relates to a method for modifying composted biodegradeable materials and to the resultant composition.

Many animal and vegetable waste materials containing organic compounds undergo aerobic bacterial decomposition to give products containing humic acids or derivatives thereof which are of value in conditioning soil structure, or which serve as plant growth media or as plant nutrient compositions. Thus, vegetable matter, for example household or municipal waste or agricultural residues such as vegetable toppings or straw, or animal wastes, such as animal litter or excreta or abattoir waste, or sewage sludge or solids can be composted in open heaps or in a vessel provided with aeration or oxygenation means to give a solid friable product in which the biodegradable material in the waste is converted at least in part to plant physiologically acceptable materials. If necessary, the waste can have undergone some form of pretreatment, such as de-watering or removable of non-biodegradable solids such as stones, glass, metals or plastics, to render the waste more suitable for composting. If necessary, an inoculum can be used to generate the necessary microbial activity and the material can be stirred or otherwise agitated to aid exposure to the air or oxygen necessary for decomposition to take place. Typically, such decomposition requires some water, usually up to about 50 to 75% w/w, and generates heat spontaneously so that some measure of temperature control may be desired to prevent the material overheating to above 75°C and thus reducing the microbial activity excessively, for example by turning the heaps of composting material or by cooling the vessel in which composting occurs.

For convenience, such aerobic decomposition of biodegradable organic materials will be denoted generically hereinafter as composting and the product as a compost.

A compost may be used as a plant growth medium or a soil conditioner "as is", without further modification. A compost may be distinguished from a fertiliser, which is not suitable for use as a plant growth medium or a soil conditioner. A fertiliser is a chemical formulation containing plant nutrients, typically in concentrations which are phytotoxic.

A plant growth medium need not necessarily be a compost. For example US patent number 4 767 440 (Salac) discloses a potting medium which comprises a mixture of a high carbon plant material such as wheat straw and a high nitrogen plant material such as alfalfa hay. Phosphoric acid is periodically added to a plant growing in the potting medium to adjust the pH of the potting medium to the preferred value for the plant, typically pH 5.5 to 7.1. The acid helps to modify the rate of release of nitrogen as well as providing phosphate for the plant.

Compost will usually have an excess of potassium as compared to the other main plant nutrients. It has been proposed to incorporate plant nutrients, such as ammonium phosphates, to correct this imbalance. Some of such nutrients are acidic, or give rise to acidic materials, as with elemental sulphur which forms sulphuric acid during the composting process. However, the amount of such materials added has been restricted by the plant nutrient levels required and the effect of such materials on the acidity of the compost has been negligible and has not been a factor when assessing how much material should be added.

Notwithstanding the alkaline conditions which develop during the composting process, many plant growth media are more effective if they have an acidic pH, typically in the range 4 to 7, usually 5 to 6.5. It has hitherto been considered impractical to adjust the pH of a composted material to achieve the desired lower pH range for optimum plant growth, since this would require excessive amounts of the conventional plant nutrients, such as monoammonium phosphate (MAP), to reduce the pH sufficiently. This excessive amount would lead to gross distortion of the N:P:K nutrient ratios in the resultant compost.

Surprisingly, we have found that the addition of phosphoric acid and/or nitric acid to the compost reduces the pH value to within the desired range for plant growth and also enhances the N and P values in the compost to compensate for the K imbalance typically present and to achieve a compost which has enhanced plant growth properties and which makes other necessary plant nutrients in the compost, for example the calcium and magnesium, more readily available to the plant.

The amounts of acid required do not materially affect the bulk density or other desirable properties of the compost.

Accordingly, the present invention provides a method of manufacturing a modified composted material for use as a plant growth medium or a soil conditioner, which method comprises adding free phosphoric acid and/or nitric acid to an alkaline composted material in sufficient amount to lower the overall pH of the composted material to a value in the range 4 to 7.

We have found that the addition of the acid also substantially halts the composting process, so that the addition of acid is preferably carried out at the end of the composting process. However, the addition of the acid can also be carried out to stop continued microbial activity and thus stabilise a partially composted material at any desired extent of composting. This also has the effect of minimising further volume reduction caused by continued microbial action, thereby protecting the commercial value of the compost by retaining its bulk and reducing the apparent under filling of a container of the compost that might otherwise be perceived by a purchaser.

The invention also provides a modified composted material having an overall pH value in the range 4 to 7 which has been manufactured by the addition of phosphoric and/or nitric acids to an alkaline composted material in sufficient amount to lower the overall pH to a value in the range 4 to 7.

Preferably, the compost is one derived from the aerobic biodegradation of organic waste, preferably one containing a substantial proportion of vegetable matter, notably a conventional garden waste compost.

It is particularly preferred to use compost in which less than 10% by weight of the organic carbon content is oxidised to carbon dioxide by microbial action at ambient temperatures and at a moisture content of between 40 and 60% by weight over a period of 80 days. It is also preferred that the compost is high in lignin content, typically in excess of 60% lignin and low in cellulose, typically less than 15% cellulose, by weight of dry matter, and that the majority of that cellulose is in a slowly oxidisable form.

Such material can be composted in a simple heap or a windrow which is turned from time to time to expose the material to air. in which the material progressively descends the vessel to be discharged by an auger or other discharge means at the foot of the vessel, air or oxygen being introduced through spargers at the base and/or at intervals up the height of the tower. For convenience, the invention will be described hereinafter in terms of composting chopped vegetable waste, which may be admixed with or incorporate animal waste, in a heap exposed to the atmosphere.

The heap can be formed in any suitable manner, for example as a series of layers of material with soil or other microbial inoculum interspersed between the layers. Composting may also be carried out in elongated windrows of material which are turned mechanically from time to time The heap is wetted initially to a water content of from 50 to 70% w/w and allowed to decompose spontaneously with turning from time to time. If desired, an inoculum can be incorporated into water used to wet the material initially and the wetted heap turned and mixed to ensure uniform incorporation of the water and inoculum throughout the heap. If desired, nutrients which aid microbial growth, for example ammonium sulphate and/or urea, can be incorporated into the heap. Where the heap is built up progressively, the wetting and nutrient or inoculum incorporation can be carried out at each addition of material to the heap. However, it is desirable to ensure that each addition of material to the heap contains at least sufficient water to allow composting to take place and that overall the moisture content of the heap is maintained at at least 50% w/w.

Composting is carried out in the conventional manner until the desired extent of composting has been achieved. This will depend upon the extent of decomposition of the feed material which is required and it may be suitable to allow composting to continue past the stage at which the majority of the decomposable material has been composted, for example as when the heap is allowed to stand until the compost is required by the user. However, where the composting is carried out on a commercial scale, for example in turned windrows, composting is typically carried out for a period of at least five weeks, at which time the material will usually be sufficiently decomposed for use as the basis of a plant growth medium.

The resultant compost can be sieved, dried, chopped, milled or otherwise treated according to the end use to which it is to be put. One or more plant nutrients, for example ammonium phosphate and/or urea, can be admixed with the compost to enhance its plant nutrient content.

As stated above, the phosphoric or nitric acid is incorporated into the compost when the decomposable material has been composted to the desired extent and before or after any post treatment of the compost as described above. The acid can be added in the form of a fluid containing the desired acid, typically an aqueous phosphoric and/or nitric acid. However, the fluid acid can be absorbed onto a solid diluent or carrier, such as sand, peat or vermiculite, and the solid then incorporated into the compost; or a solid material having acidic properties, for example urea phosphate, can be used to supply the necessary acidic material. The acidic material can be incorporated by any suitable method, eg. by spraying the fluid acid or acidified solid carried onto the compost and tumbling the mixture to distribute the solid or fluid throughout the compost. If desired, mixtures of fluid and solid acidic materials may be used and the addition of the acidic material can be in a series of aliquots until the desired pH has been achieved. Thus, the pH value of the compost can be adjusted in a series of half a pH unit steps, with mixing between each step. In a particularly preferred commercial scale operation, the fluid acidic material is sprayed onto a tumbling bed of compost as the latter passes through a rotating drum or a trough in which a shaft carrying radial paddles or arms rotates.

The amount of acidic material required to achieve the desired pH value in the compost can readily be determined by simple trial and error tests and by monitoring the pH value of the acidified compost. The pH values quoted herein are those obtained by the method described in British Standard No 4156:1990, Recommendations for Peat for Horticultural & Landscape Use. As stated above, for most growing media the acidified compost preferably has a pH value in the range 5 to 6.5. However, in growing media designed for calciphobic plants, the pH should be around 4 to 5. We have found that at such pH values further composting of the decomposable material substantially ceases and the acidified compost is substantially stabilised against secondary decomposition which might otherwise occur in any sack, bag or other container into which the acidified compost is packed for distribution and sale. If desired, the acidic material can be incorporated into the compost at some point before full composting of the decomposable material has been achieved, for example to retain some straw stalks in the final compost for visual and/or soil structuring purposes. However, acidification will usually be carried out when composting has largely been completed.

The addition of the acid not only achieves a desired pH value in the acidified compost, but also incorporates N and P plant nutrient values into the compost. Surprisingly, we have found that these nutrient values are incorporated in substantially the amount required to counterbalance the excess K content of the compost which is usually present in a conventional compost. As a result, the acidified compost can be used directly without the need to incorporate other plant nutrients and without adding excessively to the bulk and electrolyte content of the compost. If the pH were adjusted with mono-ammonium phosphate, this would typically require an unacceptably high level of mono-ammonium phosphate which would involve the addition of up to 5 g of nitrogen and lO g of phosphorus to a litre of the compost to change the pH from a typical value of about 8.5 to a value of 6.5. This in turn would displace the nutrient balance of compost and require the addition of further potash, which might in turn raise the level of soluble salts to a potentially phytotoxic level. That the amount of acid required to correct the pH value should correspond to the N and P requirements for a wide range of composts obtained from a wide range of decomposable materials is totally unexpected and is an advantage in the use of the free acids as opposed to their salts.

The composts produced by the method of the invention are characterised in that they have an acidic pH as compared to the alkaline pH of conventional composts. This acidic nature of the compost enhances the growth of plants in the compost and also makes constituents within the compost more readily available to the plants grown in the compost. For example, calcium and magnesium have been found to be more readily assimilated by plants from the composts of the invention than from composts with an alkaline pH. The composts of the invention find use in formulating conventional growing media, optionally with dilution with a low nutrient bulking agent, for example coir, bark, sand, vermiculite, or perlite. The compost may also incorporate additional components conventionally incorporated into growing media: for example wetting agents to aid wetting up of the compost; fungicides or pesticides; additional plant nutrients or trace elements which may be in delayed or sustained release forms; and other sources of humic acid, for example lignite or humates.

The invention will now be illustrated by the following examples in which all parts and percentages are given by weight unless stated otherwise:

### Example 1:

Chopped vegetable waste was composted in a windrow at a moisture content of 75% w/w by spreading the chopped waste upon a concrete hardstanding and sprinkling water onto the waste as it was formed into the windrow. The windrow was tossed and reformed at intervals over a six week period. During this time, aerobic decomposition of the vegetable matter took place. The temperature of the material in the windrow rose to about 65°C and the pH, as determined by the method of BSS 4156:1990, was found to be about 8.

At the end of six weeks, the waste had decomposed to a friable dark brown material suitable for use as a soil improver (GM4).

To a number of 1 litre samples of this material were added 2.83 ml of 88% P₂O₅ concentration phosphoric acid. The acid was sprayed onto the material and mixed in by stirring, until the pH as determined above lay in the region of 6.5. To each 1 litre sample of the acidified compost was then added 5.2 g of ammonium nitrate, to provide N nutrients. The resultant compost was then diluted with reconstituted coir in the ratio of 1 volume of compost to 10 volumes of the coir to give a growing medium (GM1) suitable for pricking out tomato seedlings.

The nutrient contents of materials GM4 and GM1 were determined using conventional analytical techniques.

### Example 2:

By way of further example, a mixture of vegetable waste and animal manure was co-composted as in Example 1 to give a friable brown material (GM3) which had a pH value of 8.5. To 1 litre samples of this co-composted material were added 6.62 ml of 1.0 Normal phosphoric acid and 7.00 ml of 1.0 Normal nitric acid to produce an acidified compost (GM2) having a pH of about 6.5 suitable for use in pricking out tomato seedlings without dilution with coir.

The nutrient contents of materials GM3 and GM2 were also determined using conventional techniques.

### Example 3:

The materials GM1 to GM4 were used as growth media for pricking out tomato seedlings under substantially identical lighting, moisture and temperature conditions in a greenhouse. At the end of ten weeks the seedlings were inspected visually by an experienced horticulturalist and the vigour of growth of the seedlings assessed or an arbitrary scale of 1 to 10 using a number of replications for each plant growth medium under test. The results were as follows:

| | | | | |
|---|---|---|---|---|
| Compost: | GM1 | GM2 | GM3 | GM4 |
| Vigour score: | 9.7 | 10.0 | 4.2 | 2.9 |

From the above results, it will be seen that those composts which had been acidified (GM1 and GM2) gave more vigorous growth than the other composts, even where the N and P contents had been raised to the same levels.

Plants grown in composts GM3 and GM4 showed symptoms of induced phosphate deficiency caused by high pH levels. In addition, plants grown in compost GM4 seemed to be retarded by excessively high nutrient levels.

Composts GM1 and GM2 were subsequently used to raise a range of edible and ornamental crops in pots and to produce crops of tomatoes and sweet peppers in growing bags. Both composts performed closely comparable to proprietary peat-based growing media.

## Claims

1. A method of manufacturing a modified composted material suitable for use as a plant growth medium or a soil conditioner, which method comprises adding phosphoric acid and/or nitric acid to an alkaline composted material in sufficient amount to lower the overall pH of the composted material to a value in the range 4 to 7.

2. A method as claimed in Claim 1, wherein the addition of the acid substantially halts the composting process.

3. A method as claimed in Claim 1, wherein the acid is added at the end of the composting process.

4. A method as claimed in any one of the preceding claims, wherein the pH of the composted material is lowered to a value in the range 5 to 6.5.

5. A method as claimed in any one of the preceding claims, wherein the acid is absorbed onto a solid diluent or carrier and the solid is incorporated into the compost.

6. A method as claimed in any one of Claims 1 to 3, wherein the acid is provided by a urea phosphate.

7. A method as claimed in any one of the preceding claims, wherein the acid is incorporated in the compost while the compost is tumbled to distribute the acid through the mixture.

8. A modified composted material suitable for use as a plant growth medium or a soil conditioner, which has been manufactured by the addition of phosphoric and/or nitric acid to an alkaline composted material in sufficient amount to lower the overall pH to a value in the range 4 to 7.

9. A modified composted material suitable for use as a plant growth medium or a soil conditioner, having an overall pH value in the range 4 to 7, obtainable by the method of Claim 1.

10. A plant growth medium comprising a modified composted material as claimed in Claim 8 or Claim 9 in admixture with a low nutrient bulking agent.
